(19) **Europäisches Patentamt**
**European Patent Office**
**Office européen des brevets**

(11) **EP 4 657 304 A1**

(12) **EUROPEAN PATENT APPLICATION**
published in accordance with Art. 153(4) EPC

(43) Date of publication:
**03.12.2025 Bulletin 2025/49**

(51) International Patent Classification (IPC):
***G06F 30/20*** (2020.01)

(21) Application number: **24880892.5**

(86) International application number:
**PCT/CN2024/076131**

(22) Date of filing: **05.02.2024**

(87) International publication number:
**WO 2025/086505 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.10.2023 CN 202311380213**

(71) Applicant: **Chongqing Changan Automobile Co.,
Ltd.
Chongqing 400023 (CN)**

(72) Inventors:
• **WANG, Peng
Chongqing 400023 (CN)**

• **LI, Song
Chongqing 400023 (CN)**
• **YANG, Xiaoling
Chongqing 400023 (CN)**
• **WANG, Jianwen
Chongqing 400023 (CN)**
• **YU, Yinglong
Chongqing 400023 (CN)**

(74) Representative: **Keller Schneider
Patent- und Markenanwälte AG
Eigerstrasse 2
Postfach
3000 Bern 14 (CH)**

(54) **OPERATING CONDITION DESIGN METHOD FOR RELIABILITY VERIFICATION OF DUAL-MOTOR SYSTEM OF P13-CONFIGURATION ELECTRIC DRIVE TRANSMISSION AND RELIABILITY TESTING METHOD FOR DUAL-MOTOR SYSTEM OF P13-CONFIGURATION ELECTRIC DRIVE TRANSMISSION**

(57) An operating condition design method for reliability verification of a dual-motor system of a P13-configuration electricdrive transmission and a reliability testing method for a dual-motor system of a P13-configuration electric drive transmission, which meet the development, usage, and safety requirements of electric drive transmissions while shortening the product development cycle. The design method comprises: on the basis of structural principles and usage modes of P13-configuration electric drive transmissions, and considering also motor verification coverage scenarios and whole-vehicle road scenarios, designing dual-motor system reliability verification operating conditions which use P3 motor operating conditions as the main conditions, complemented by PI motor operating conditions; and combining product performance design parameters and whole-vehicle control logic to form an initial operating condition test table for the dual-motor system reliability verification operating conditions (S101); and adjusting the running time of each operating condition in the initial operating condition test table, so as to obtain a final required operating condition test table for dual-motor system reliability verification and the number of operating condition cycles for the dual-motor system reliability verification (S102).

Design, based on a structural principle and a use mode of the P13 configuration electric drive transmission and in combination with a motor verification coverage scenario and a whole vehicle road scenario, a dual-motor system reliability verification working condition with a P3 motor working condition as a main line and a P1 motor working condition as a cooperation one; form, in combination with product performance design parameters and a whole vehicle control logic, an initial working condition test table of the dual-motor system reliability verification working condition — S101

Adjust an operation time of each working condition in the initial working condition test table to obtain a final required dual-motor system reliability verification working condition test table and a working condition cycle number for the dual-motor system reliability verification — S102

FIG. 5

EP 4 657 304 A1

**Description**

**TECHNICAL FIELD**

Embodiments of the present invention relate to the field of P13 configuration electric drive transmission test, and specifically to a dual-motor system reliability test method and a working condition design method for a P13 configuration electric drive transmission.

**BACKGROUND**

As a common automotive hybrid technology route, the current P13 configuration is being vigorously developed by various enterprises. Two P13-integrated motors have completed their own verification projects in a DV development stage. After a dual-motor integrated transmission forms a hybrid P13 configuration electric drive transmission, components cooperate on functions of a circuit, an oil circuit, a shaft gear, torque transmission, controller control and so on. In view of a motor system with dual motors and a controller plus a transmission, its function and stability directly affect quality of a hybrid transmission and user's real driving experience and driving safety. At present, various original equipment manufacturers do little research on reliability verification of a motor system combination for a P13 configuration electric drive transmission. In order to better develop the P13 configuration electric drive transmission and shorten a product development cycle, it is necessary to conduct reliability test research on the motor system of the P13 configuration electric drive transmission.

In view of the reliability verification of the P13 configuration dual-motor system, in currently known reliability test of the motor system of the P13 configuration electric drive transmission, a durability test method and apparatus for a dual-motor hybrid transmission (CN115575116A) mainly provide a general idea for bench test for a dual-motor electric drive transmission, and conduct bench test by using a speed target and a wheel-side torque target. Its object structure is different from that of the present invention, and there is no reliability verification method for the dual-motor system. A reliability test method and apparatus for a drive motor system (CN108983095A) mainly provide a method of verifying reliability of a motor on a bench after acquiring a work map of the motor system, calculating drive power and feed power of the motor, and further determining a speed, a torque and a time, according to a road use condition of a vehicle. The method mainly establishes work conversion between the use of the motor in the whole vehicle and the bench verification, simplifies complex and changeable working conditions of the motor system in the whole vehicle, and is convenient for the bench verification control. Its content does not involve working condition control of a single motor and whole function verification of the dual motors and the transmission system, and requires a complete vehicle function completion stage, which cannot be used for early development of an electric drive transmission project.

**SUMMARY OF THE INVENTION**

The present invention provides a dual-motor system reliability test method and a working condition design method for a P13 configuration electric drive transmission, so as to conduct reliability test on a dual-motor system of a P13 configuration electric drive transmission, which meet development, use and safety requirements of electric drive transmissions while shortening a product development cycle.

The technical solution of the present invention is as follows:

The present invention provides a working condition design method for a dual-motor system reliability verification working condition for a P13 configuration electric drive transmission. The P13 configuration electric drive transmission includes a dual-motor system and other component systems, and the other component systems include a gear, a shafting, and a bearing. The method includes:

designing, based on a structural principle and a use mode of the P13 configuration electric drive transmission and in combination with a motor verification coverage scenario and a whole vehicle road scenario, a dual-motor system reliability verification working condition which use a P3 motor working conditions as main conditions and use P1 motor working conditions as complemental conditions; forming, in combination with product performance design parameters and a whole vehicle control logic, an initial working condition test table of working conditions for the dual-motor system reliability verification working condition;

adjusting an operation time of each working condition in the initial working condition test table to obtain a final required working condition test table for the dual-motor system reliability verification and a working condition cycle number for the dual-motor system reliability verification.

Preferably, the step of adjusting the operation time of each working condition in the initial working condition test table to obtain the final required dual-motor system reliability verification working condition test table and the working condition cycle number for the dual-motor system reliability verification includes:

testing the P13 configuration electric drive transmission based on a designd use mileage and the initial verification working condition test table of the whole P13 configuration electric drive transmission, and adjusting the operation time of each working condition in the initial working condition test table by using the Miner linear damage accumulation theory, a whole vehicle designd mileage, an alternating load cycle number of the whole P13 configuration electric drive transmission on torque and a load capacity of the whole P13 configuration electric drive transmission on change rates of speed and torque until an assessment of the other component systems of the P13 configuration electric drive transmission all meet a reliability strength requirement of the whole vehicle design use mileage and the other component systems all meet a load level for normal use, to obtain the final required dual-motor system reliability verification working condition test table and the working condition cycle number for the dual-motor system reliability verification.

Preferably, a first-type working conditions related to product performance design parameter and second-type working conditions related to normal use of the whole vehicle are comprised in the initial working condition test table, wherein a parameter of the first-type working conditions and the second-type working conditions comprise a P1 motor torque, a P3 motor torque, a P1 motor speed, a P3 motor speed, respective working durations and a cumulative time length; wherein the cumulative time length refers to a total test duration in a single reliability verification cycle;

the step of forming, in combination with the product performance design parameters and the whole vehicle control logic, the initial working condition test table of working conditions for the dual-motor system reliability verification working condition includes:

determining, based on the product performance design parameters of the P13 configuration electric drive transmission, parameter boundaries of the P1 motor torque, the P3 motor torque, the P1 motor speed and the P3 motor speed in the first-type working condition; determining, in combination with a whole cooling capacity of the P13 configuration electric drive transmission, a stator temperature and a load capacity of the other component systems, the parameter boundary of the respective duration and the cumulative time length;

determining, based on the whole vehicle control logic, parameter boundaries of the P1 motor torque, the P3 motor torque, the P1 motor speed and the P3 motor speed in the second-type working condition; and determining, in combination with the overall cooling capacity of the P13 configuration electric drive transmission, the stator temperature and the load capacity of the other component systems, the parameter boundary of the respective duration and the cumulative time length.

Preferably, the first-type working conditions comprise a P3 motor design target working condition;

in a P3 motor design target working condition A: the boundary of the P3 motor torque is determined according to a peak torque of the P3 motor, the boundary of the P3 motor speed is determined according to a turning-point speed of the P3 motor, the P1 motor torque and the P1 motor speed are both 0, and the recpective working durations are determined according to a time required for the stator temperature of the P3 motor to rise to an upper limit temperature when the P3 motor continuously outputs at the peak torque.

Preferably, the first-type working conditions further comprises a motor system coupling working condition B; and the motor system coupling working condition B comprises three coupling working conditions;

in a first coupling working condition B1: the boundary of the P3 motor torque is determined according to a rated torque of the P3 motor, the boundary of the P3 motor speed is determined according to a rated speed of the P3 motor, the boundary of the P1 motor torque is determined according to an electricity-generation peak torque of the P1 motor, and the boundary of the P1 motor speed is determined according to a turning-point speed of the P1 motor; the duration is determined according to a time required for the stator temperature of the P1 motor to rise to an upper limit temperature when the P1 motor outputs at the power generation peak torque;

in a second coupling working condition B2: the boundary of the P3 motor torque is determined according to a rated torque of the P3 motor, the boundary of the P3 motor speed is determined according to a rated speed of the P3 motor, the boundary of the P1 motor torque is determined according to an electricity-generation rated torque of the P1 motor, the boundary of the P1 motor speed is determined according to a rated speed of the P1 motor, and the recpective working durations are determined according to the whole cooling capability of the electric drive transmission;

in a third coupling working condition B3: the boundary of the P3 motor torque is determined according to a continuous-working torque of the P3 motor at a maximum working speed, the boundary of the P3 motor speed is determined according to a maximum working speed of the P3 motor, the boundary of the P1 motor torque is determined according to a continuous-working torque of the P1 motor at a maximum working speed, the boundary of the P1 motor speed is determined according to a maximum working speed of the P1 motor, and the respective working durations are preset.

Preferably, the second-type working conditions comprise a common working condition C of the whole vehicle, in the common working condition C of the whole vehicle: the boundary of the P3 motor torque is determined according to a product of the rated torque of the P3 motor multiplied by a preset value, the boundary of the P3 motor speed is determined according to a preset motor speed, the boundary of the P1 motor torque is determined according to a normal electricity-generation torque of the P1 motor, the boundary of the P1 motor speed is determined according to a normal electricity-generation speed of the P1 motor, and the respective working durations are preset.

Preferably, the first-type working conditions further comprises a P3 motor electricity-feeding design target working condition D, and the P3 motor electricity-feeding design target working condition D comprises three electricity-feeding design target working conditions;

the P1 motor torque, the P1 motor speed and the duration of the P1 motor in the three electricity-feeding design target working conditions are 0;
in a first electricity-feeding design target working condition D1: the boundary value of the P3 motor torque is determined according to a feed rated torque of the P3 motor, the boundary value of the P3 motor speed is determined according to a rated speed of the P3 motor, and the recpective working durations are determined according to a time required for the stator temperature to rise to the upper limit temperature when the P3 motor outputs at the feed rated torque;
in a second electricity-feeding design target working condition D2: the boundary value of the P3 motor torque is determined according to a feed peak torque of the P3 motor, the boundary value of the P3 motor speed is determined according to a turning-point speed of the P3 motor, and the recpective working durations are determined according to a time required for the stator temperature to rise to the upper limit temperature when the P3 motor is at the feed peak torque;
in a third electricity-feeding design target working condition D3: the boundary value of the P3 motor torque is determined according to the feed rated torque of the P3 motor, the boundary value of the P3 motor speed is determined according to the rated speed of the P3 motor, and the recpective working durations are determined according to the whole cooling capacity of the electric drive transmission.

Preferably, the first-type working conditions further comprises a P1 motor design target working condition E;
in the P1 motor design target working condition E: the P3 motor torque, the P3 motor speed and the duration of the P3 motor are 0, the boundary of the P1 motor torque is determined according to an electricity-generation rated torque of the P1 motor, the boundary of the P1 motor speed is determined according to a rated speed of the P1 motor, and the respective working durations are preset.

The present invention further provides a dual-motor system reliability test method for a P13 configuration electric drive transmission, including:

test preparation: installing, according to a state of a whole vehicle, the P13 configuration electric drive transmission onto a test bench;
test access inspection: including a product state confirmation, a test version data inspection, a test control boundary condition confirmation and an on-site safety inspection of the test bench;
bench commissioning control and a motor zero position learning:

preliminary performance test: conducting, before the dual-motor system reliability test, an external characteristic speed test and an external characteristic torque test on a P1 motor and a P3 motor of the P13 configuration electric drive transmission;
working condition operation: the working condition is obtained using the above design method for the dual-motor system reliability verification of the P13 configuration electric drive transmission, and the dual-motor system of the P13 configuration electric drive transmission is subjected to the cycle working condition operation according to the obtained working condition cycle number and the dual-motor system reliability verification working condition test table, wherein in the cycle working condition operation, first 80% of the cycle working condition operates according to a designed rated voltage platform, 80% to 90% of the cycle working condition operates according to a designed minimum working voltage platform, and 90% to 100% of the cycle working condition operates according to a designed maximum working voltage platform;
performance retest: conducting, after the dual-motor system reliability test, the external characteristic speed test and the external characteristic torque test on the P1 motor and the P3 motor of the P13 configuration electric drive transmission;
post-test analysis.

Preferably, in step of the test preparation, the P13 configuration electric drive transmission is installed on the bench according to the following process:
A No.3 bench drive motor is used to simulate a vehicle-mounted engine to supply energy input for the P13 configuration electric drive transmission , a No.1 bench load motor and a No.2 bench load motor are used to simulate a whole vehicle wheel end loads of the P13 configuration electric drive transmission, a motor controller PEU is used to control a function operation of the P1 motor and the P3 motor of the P13 configuration electric drive transmission, the No.1 bench load motor, the No.2 bench load motor, the motor controller PEU and a battery simulator are connected with the test bench respectively, and the battery simulator is connected with the motor controller PEU.

Preferably, in the dual-motor system reliability test process, a clutch of the P13 configuration electric drive transmission is not engaged in the whole process.

Preferably, in steps of the preliminary performance test and the performance retest,

only a feed torque portion of the P1 motor is performed when the external characteristic torque test is conducted on the P1 motor, and only a drive torque and a feed torque portion of the P3 motor are performed when the external characteristic torque test is conducted on the P3 motor;

the external characteristic speed tests are conducted on both the P1 motor and the P3 motor according to 500 rpm until a maximum working speed of the corresponding motor, and a speed point in the case of the external characteristic speed test of the P1 motor and the P3 motor comprises a rated speed and a turning-point speed of the corresponding motor;

a boundary condition of lubricating oil, cooling liquid, a lubricating flow and a voltage platform of the bench is required to be ensured that is within a product specification range of the P13 configuration electric drive transmission in steps of the preliminary performance test and the performance retest.

Preferably, in step of the bench commissioning control, a cooling liquid temperature and a lubricating oil temperature of the bench are required to be set first according to a lubrication and a cooling requirement of the P13 configuration electric drive transmission, and an oil pump speed of the bench is set according to a lubricating flow requirement of the P13 configuration electric drive transmission; and after setting alarm limits of the cooling liquid temperature, the lubricating oil temperature and the oil pump speed, the No.1 bench load motor, the No.2 bench load motor and the No.3 bench drive motor are set to adopt a speed/torque mode, and a speed of the No.1 bench load motor and a speed of the No.2 bench load motor are set after converting a P3 motor speed according to a shafting speed ratio of the P13 configuration electric drive transmission.

Preferably, in step of the working condition operation, after the 100% cycle working condition operation is completed, the P1 motor and the P3 motor of the P13 configuration electric drive transmission are controlled to respectively run for a preset duration under respective rated working voltage, the maximum working speed and the rated power.

The beneficial effects of the present invention are:

In this embodiment, based on the structural principle of the P13 configuration electric drive transmission, in combination with the product design parameters and the actual operation conditions in the vehicle use process, and with the reliability strength of the design service life of the whole vehicle as a target, the dual-motor system reliability test working condition of the P13 configuration electric drive transmission is designed. Under the designed working condition, a reliability time of main components (a shafting and a bearing) of the electric drive transmission is confirmed by using the miner linear damage principle, thus forming the dual-motor reliability test method for the P13 configuration electric drive transmission. Through this test, a software function logic of the motor system, a coupling working condition of the dual-motor system and the reliability of the main components of the electric drive transmission can be verified at an early stage of the project development. The method is a very favorable verification method after integration of dual motors and a transmission, and is an important parameter means in the product development process of the P13 configuration electric drive transmission, which achieves effects of integral verification and verification sample size reduction.

## BRIEF DESCRIPTION OF THE DRAWINGS

FIG. 1 is a schematic diagram of test bench arrangement of a P13 configuration electric drive transmission in this embodiment;

FIG. 2 is a schematic diagram of a torque working condition in the case of a dual-motor reliability test for a P13 configuration electric drive transmission in this embodiment;

FIG. 3 is a schematic diagram of a speed working condition in the case of a dual-motor reliability test for a P13 configuration electric drive transmission in this embodiment;

FIG. 4 is a schematic diagram of an S-N curve;

FIG. 5 is a schematic diagram of a design method in this embodiment; and

FIG. 6 is a schematic diagram of a test method in this embodiment.

## DETAILED DESCRIPTION

Embodiments of the present invention will now be described with reference to the drawings and preferred embodiments, and those skilled in the art will readily appreciate further advantages and benefits of the present invention from the disclosure herein. The present invention may also be implemented or applied in different other specific embodiments, and various details in this specification may be modified or changed in various ways based on different views and applications without departing from the spirit of the present invention. It should be understood that the preferred embodiments are intended to illustrate the present invention only and are not intended to limit the scope of protection of the present invention.

It should be noted that the drawings provided in the following embodiments are only used to illustrate a basic concept of the present invention in a schematic manner, and only elements related to the present invention are shown in the drawings instead of being drawn according to numbers, shapes and sizes of the elements in the actual implementation, and a type, a number and a proportion of each element in the actual implementation can be changed at will, and its element layout may also be more complex.

In the following description, a great number of details are explored to provide a more thorough explanation of the embodiments of the present application, however, it will be apparent to those skilled in the art that the embodiments of the present application can be implemented without these specific details.

The present invention relates to a control test scheme, working condition and test boundary design, and a test implementation process for dual-motor system reliability verification for a P13 configuration electric drive transmission.

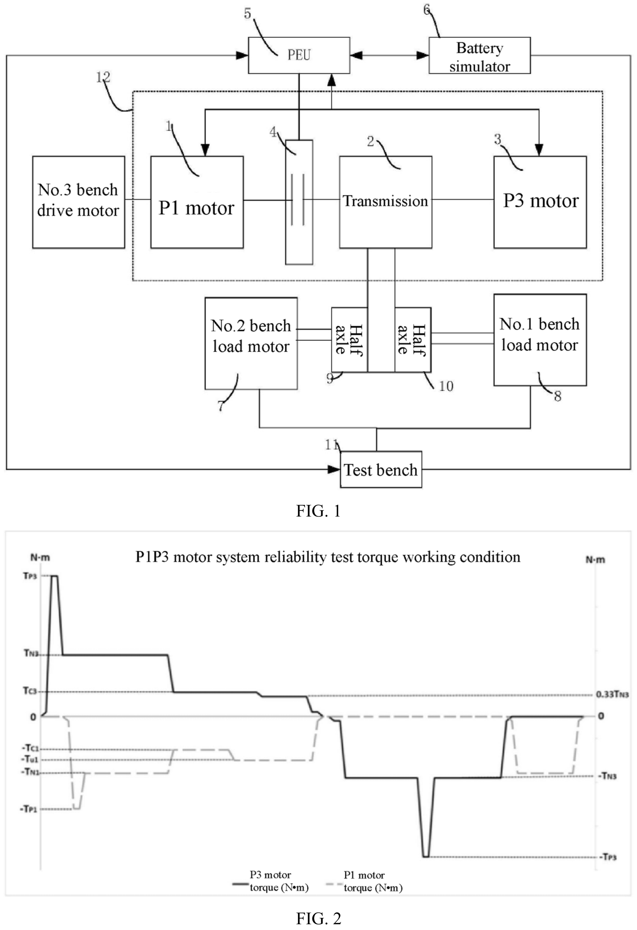

As shown in FIG. 1, a structure of the control test system is mainly composed of a P13 configuration electric drive transmission 12, a test bench device, and a control system thereof. A P1 motor 1, a clutch 4, a P3 motor 3 and a transmission 2 compose the P13 configuration electric drive transmission 12, the transmission 2 is connected with a No.1 bench load motor 8 by means of a half axle 10, the transmission 2 is connected with a No.2 bench load motor 7 by means of a half axle 9, a PEU (motor controller) 5 serves as a control module of the P13 configuration electric drive transmission 12, and in addition, the No.1 bench load motor 8, the No.2 bench load motor 7, a test bench 11, a temperature control device, a battery simulator 6, and the like compose the test bench device. The test bench 11 also needs to be equipped with a data acquisition system, which can accurately measure and acquire necessary test parameters such as a temperature, a pressure, a speed, and the like. The bench control system is able to communicate with the electric drive transmission product control system PEU.

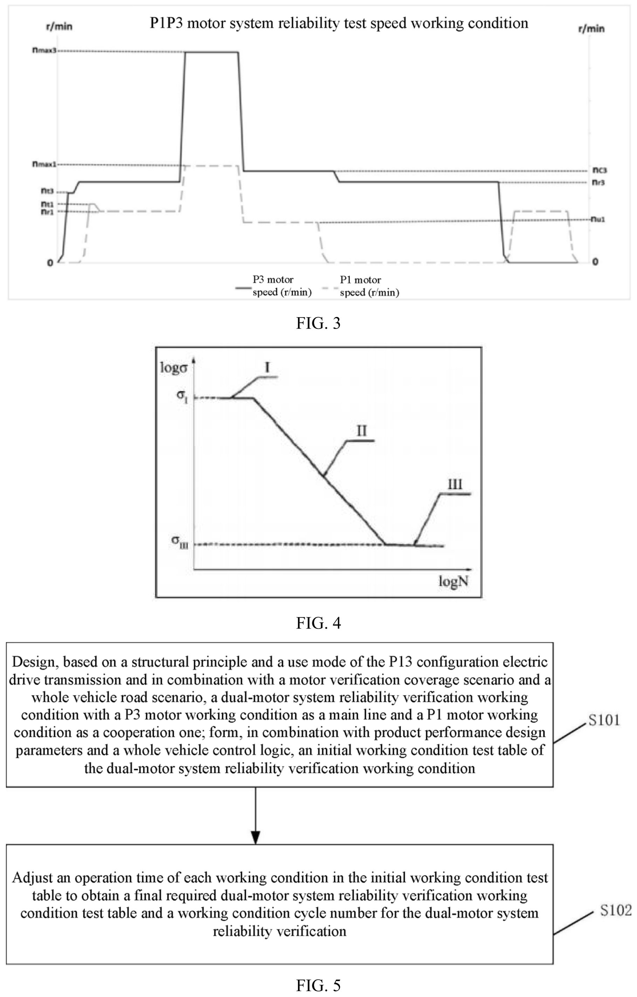

As shown in FIG. 5, in this embodiment, the aforementioned control test system is used to realize design of a dual-motor system reliability verification working condition of a P13 configuration electric drive transmission, and the specific design method includes:

> S101, designing, based on a structural principle and a use mode of the P13 configuration electric drive transmission and in combination with a motor verification coverage scenario and a whole vehicle road scenario, a dual-motor system reliability verification working condition which use a P3 motor working conditions as main conditions and use P1 motor working conditions as complemental conditions; forming, in combination with product performance design parameters and a whole vehicle control logic, an initial working condition test table of working conditions for the dual-motor system reliability verification working condition; and
>
> S102, adjusting an operation time of each working condition in the initial working condition test table to obtain a final required working condition test table for the dual-motor system reliability verification and a working condition cycle number for the dual-motor system reliability verification.

The S102 specifically includes: testing the P13 configuration electric drive transmission based on a designd use mileage and the initial verification working condition test table of the whole P13 configuration electric drive transmission, and adjusting the operation time of each working condition in the initial working condition test table by using the Miner linear damage accumulation theory, a whole vehicle designd mileage, an alternating load cycle number of the whole P13 configuration electric drive transmission on torque and a load capacity of the whole P13 configuration electric drive transmission on change rates of speed and torque until an assessment of the other component systems of the P13 configuration electric drive transmission all meet a reliability strength requirement of the whole vehicle design use mileage and the other component systems all meet a load level for normal use, to obtain the final required dual-motor system reliability verification working condition test table and the working condition cycle number for the dual-motor system reliability verification. Specifically, referring to FIG. 2 and FIG. 3, a design process of the dual-motor system reliability verification working condition in this embodiment is as follows.

1. P13 motor system test scheme

The P1 motor 1 (GM motor) of the P13 configuration electric drive transmission 12 is located at a front end of the transmission 2 and is connected with an engine. During use, the engine is driven to rotate and ignite to start the motor. During normal working of the engine, the P1 motor 1 uses energy provided by the engine to feed (negative work) and converts it into electric energy to be stored in the battery or provided to the P3 motor 3 for use When the whole vehicle requires a large torque, the clutch 4 is engaged, and an output torque of the engine is transmitted to a transmission shafting for assistance by means of the clutch, and at this time, the P1 motor 1 idles with the engine. The P3 motor 3 (TM motor) is directly connected with the transmission shafting, uses electric energy to output a torque to provide a main power source (positive power) for vehicle driving, at the same time, in a process of vehicle braking, uses vehicle braking energy recovery to convert kinetic energy into electric energy (negative power) and reversely inputs it into the battery. The above is the basic working principle of the P13 configuration electric drive transmission, and realization of its function is controlled by the electric drive transmission controller (PEU).

A main function of the P1 motor 1 in the P13 configuration electric drive transmission is to use the energy of the engine to generate electricity (negative work), and a main function of the P3 motor 3 is to provide power for the vehicle (positive work) and recover energy during braking (negative work). According to an application scenario of the dual-motor system on the whole vehicle, considering comprehensive verification of whole functions and reliability of the motor, the controller, the transmission shafting and accessory systems, taking into account verification implementation and a target of verification cycle shortening, combining with a working condition of a sample in each portion and working modes of the bench drive motor and the load motor, on the premise of following a design basis and a control strategy of the electric drive transmission, the dual-motor system reliability verification method is sorted out using drive motor assembly bench-level verification, as shown in FIG. 1, the two motors conduct working condition operation at the same time, according to the whole vehicle control logic, the two motors work together, and a test boundary condition refers to a level of the whole vehicle. The No.3 bench drive motor simulates a vehicle-mounted engine to provide energy input, the test control adopts a Speed/Torque mode, and reliability of a P1 motor end is assessed in combination with the verification working condition; the No.1 bench load motor and the No.2 bench load motor simulate whole vehicle wheel end loads, the test control adopts the Speed/Torque mode, and reliability of a P3 motor end is assessed in combination with the verification working condition; and the motor controller PEU controls function operation of the two motors, and completes the verification in combination with the whole vehicle control logic and the verification working conditions of the two motors. The whole verification process assesses the reliability of the motor system, and the engine power is not required to transmit power to the transmission shafting, so the clutch 4 is not engaged in the whole process.

2. Dual-motor system verification working condition design for the P13 configuration electric drive transmission

According to a motor design standard of the P13 configuration electric drive transmission, performance parameters of the P1 and P3 motor products in the design process have been determined to be: a rated power $P_N$, a rated torque $T_N$, a peak power $P_P$, a peak torque $T_P$ and a maximum working speed $n_{max}$. Based on relevant performance parameters, the following common parameters can be calculated:

$T_C$-Continuous torque at a maximum working speed:

$$Tc = \frac{P_N * 9549}{n_{max}}$$

$n_r$-rated working speed:

$$nr = \frac{P_N * 9549}{T_N}$$

nt-turning speed (a maximum speed at which the motor system can output the peak torque):

$$nt = \frac{P_N * 9549}{T_P}$$

The working condition design for the P1 motor is based on design of a load torque at a P1 input end and in combination with an engine control strategy to determine an input torque for power generation working condition verification. The working condition design of the P3 motor is based on design of a load torque at a P3 input end and in combination with road spectrum simulation data to determine an input torque for direct drive and energy recovery verification. In the application scenario, the working condition of the P3 motor system is more complex than that of the P1 motor, and therefore the dual-motor system reliability verification working condition design takes the working condition of the P3 motor as a main line, and the working condition of the P1 motor as a cooperation one. According to the motor verification coverage scenario and the whole vehicle road scenario, the dual-motor system reliability verification working condition design for the P13 configuration electric drive transmission are conducted according to the following scheme:

(1) Product design performance parameter working condition (i.e. a first-type working condition):

| **Torque N · m** | | **Speed r/min** |
|---|---|---|
| Peak torque $T_P$ | ← | Turning torque $n_t$ |
| Rated torque $T_N$ | ← | Rated speed $n_r$ |
| Continuous torque at maximum working speed $T_C$ | ← | Maximum working speed $n_{max}$ |
| Feed rated torque $-T_P$ | ← | Rated speed $n_r$ |
| Feed maximum torque $-T_P$ | ← | Turning speed $n_r$ |

(2) normal use working condition of the whole vehicle (i.e. second-type working conditions):

| **Torque N · m** | | **Speed r/min** |
|---|---|---|
| Medium and low load torque (33% * $T_N$) | ← | Conventional speed (80 kM/H) use speed $n_c$ |
| P1 normal electricity-generation torque $T_u$ | ← P1 | normal electricity- generation speed $n_u$ |

(3) The product design parameter is combined to determine a parameter operation boundary for the dual-motor system reliability verification working condition. The following needs to be considered when the parameter operation boundary is determined:

① A motor peak torque operation duration is mainly affected by a motor stator temperature, and the factor determines a peak torque duration of the P1 motor and a peak torque duration of the P3 motor;

② a whole cooling capacity of the electric drive transmission (mainly a cooling capacity of a stator) affects an operation time of a cooling working condition after the peak torque working condition;

③ a control power parameter of the controller can meet use conditions of the two motors, that is, an output power of the P1 motor and an output power of the P3 motor are less than or equal to an output power of the motor controller PEU;

④ A torque output slope of the hybrid transmission shafting portion is smaller than that of a pure electric vehicle, and a load capacity of a gear shafting needs to be taken into account for a torque output slope of the hybrid transmission, and according to simulation analysis of a whole vehicle road verification spectrum, a torque output slope of the hybrid electric transmission is below 40 N.m/s, and a speed change is within 500 rpm/s.

According to a coupling working principle and a performance parameter of the P1 motor 1, the P3 motor 3 and the motor controller PEU, in accordance with a boundary condition of the whole vehicle, after combining and sorting required working conditions, the motor system reliability working conditions for the P13 configuration electric drive transmission as shown in Table 1 are obtained:

| Serial No. | Working Condition Mode | P3 Motor Torque (N · m) | P3 Motor Speed (r/min) | P1 Motor Torque (N · m) | P1 Motor Speed (r/min) | Duration (s) | Cumulative Time (s) |
|---|---|---|---|---|---|---|---|
| 1 | A | 0 to first preset torque | 0 to first preset speed | 0 | 0 | first duration t1 (minimum duration for given starting speed and torque of P3 motor ) | t1 |

(continued)

| Serial No. | Working Condition Mode | P3 Motor Torque (N · m) | P3 Motor Speed (r/min) | P1 Motor Torque (N · m) | P1 Motor Speed (r/min) | Duration (s) | Cumulative Time (s) |
|---|---|---|---|---|---|---|---|
| 2 | | first preset torque to $T_{P3}$ (peak torque of P3 motor) | first preset speed to $n_{t3}$ (turning speed of P3 motor) | 0 | 0 | t2 (determined according to shafting load capacity of electric drive transmission, and ensuring speed change of P3 motor to be less than 500 r/s) | sum of t1 and t2 |
| 3 | | $T_{P3}$ (peak torque of P3 motor) | $n_{t3}$ (turning speed of P3 motor) | 0 | 0 | t3 (determined by product performance parameter of P3 motor, specifically, product performance parameter of P3 motor determines that continuous output time of peak torque is 10 s) | sum of t1 to t3 |
| 4 | | $T_{P3}$ (peak torque of P3 motor) to $T_{N3}$ (rated torque of P3 motor) | $n_{t3}$ (turning speed of P3 motor) to $n_{r3}$ (rated speed of P3 motor) | 0 | 0 | t4 (determined according to shafting load capacity of electric drive transmission, and ensuring torque change rate of P3 motor to be less than 40 N/s) | sum of t1 to t4 |

(continued)

| Serial No. | Working Condition Mode | P3 Motor Torque (N · m) | P3 Motor Speed (r/min) | P1 Motor Torque (N · m) | P1 Motor Speed (r/min) | Duration (s) | Cumulative Time (s) |
|---|---|---|---|---|---|---|---|
| 5 | | $T_{N3}$ (rated torque of P3 motor) | $n_{r3}$ (rated speed of P3 motor) | 0 to second preset torque | 0 to second preset speed | t5 (minimum duration for given starting speed and torque of P3 motor ) | sum of t1 to t5 |
| 6 | | $T_{N3}$ (rated torque of P3 motor) | $n_{r3}$ (rated speed of P3 motor) | second preset torque to $-T_{P1}$ (power generation peak torque of P1 motor) | 0 to $n_{t1}$ (turning speed of P1 motor) | t6 (referring to rising speed of P3 motor) | sum of t1 to t6 |
| 7 | B1 | $T_{N3}$ (rated torque of P3 motor) | $n_{r3}$ (rated speed of P3 motor) | $-T_{P1}$ (power generation peak torque of P1 motor) | $n_{t1}$ (turning speed of P1 motor) | t7 (determined by product performance parameter of P1 motor, specifically, product performance parameter of P1 motor determine that continuous output time of P1 motor at peak torque is 10 s) | sum of t1 to t7 |
| 8 | | $T_{N3}$ (rated torque of P3 motor) | $n_{r3}$ (rated speed of P3 motor) | $-T_{P1}$ (power generation peak torque of P1 motor) to $-T_{N1}$ (power generation rated torque of P1 motor) | $n_{t1}$ (turning speed of P1 motor) to $n_{t1}$ (rated speed of P1 motor) | t8 (determined according to shafting load capacity of electric drive transmission, and ensuring torque change of P1 motor to be less than 40 N/s and rate change to be less than 500 r/min) | sum of t1 to t8 |

(continued)

| Serial No. | Working Condition Mode | P3 Motor Torque (N · m) | P3 Motor Speed (r/min) | P1 Motor Torque (N · m) | P1 Motor Speed (r/min) | Duration (s) | Cumulative Time (s) |
|---|---|---|---|---|---|---|---|
| 9 | B2 | $T_{N3}$ (rated torque of P3 motor) | $n_{r3}$ (rated speed of P3 motor) | $-T_{N1}$ (power generation rated torque of P1 motor) | $n_{t1}$ (rated speed of P1 motor) | t9 (determined according to whole cooling level of electric drive transmission, specifically time required for stator temperature of P1 motor to return to normal temperature range from current temperature) | sum of t1 to t9 |
| 10 | B3 | $T_{N3}$ (rated torque of P3 motor) to $T_{C3}$ (continuous torque at maximum working speed) (product performance parameter) | $n_{r3}$ (rated speed of P3 motor) to $n_{max3}$ (maximum working speed) (product performance parameter) | $-T_{N1}$ (power generation rated torque of P1 motor) to $-T_{C1}$ (continuous torque at maximum working speed) (product performance parameter) | $n_{r1}$ (rated speed of P1 motor) to $n_{max1}$ (maximum working speed) (product performance parameter) | t10 (determined according to shafting load capacity of electric drive transmission, which makes torque changes of P1 motor and P3 motor less than 40 N/s, and speed changes of P1 motor and P3 motor less than 500 r/min) | sum of t1 to t10 |

(continued)

| Serial No. | Working Condition Mode | P3 Motor Torque (N·m) | P3 Motor Speed (r/min) | P1 Motor Torque (N·m) | P1 Motor Speed (r/min) | Duration (s) | Cumulative Time (s) |
|---|---|---|---|---|---|---|---|
| 11 | | TC3 (continuous torque at maximum working speed) | $n_{max3}$ (maximum working speed) | -$T_{C1}$ (continuous torque at maximum working speed) | $n_{max1}$ (maximum working speed) | t11 (approximate single cycle time is confirmed according to shafting fatigue damage time of electric drive transmission and shafting alternate load capacity, and the working condition time is confirmed in combination with other working condition times) | sum of t1 to t11 |
| 12 | C | TC3 (continuous torque at maximum working speed) to preset value (determined according to whole vehicle control logic) * $T_{N3}$ (rated torque of P3 motor) | $n_{max3}$ (maximum working speed) to $n_{c3}$ (preset speed (determined according to whole vehicle control logic)) | -$T_{C1}$ (continuous torque at maximum working speed) to -$T_{u1}$ (normal electricity-generation torque of P1 motor, determined according to whole vehicle control logic) | $n_{max1}$ (maximum working speed) to $n_{u1}$ (normal electricity-generation speed of P1 motor) | t12 (determined according to shafting load capacity of electric drive transmission, which makes torque changes of P1 motor and P3 motor less than 40 N/s, and speed changes of P1 motor and P3 motor less than 500 r/min) | sum of t1 to t12 |

Table 1

| | | | | | | | |
|---|---|---|---|---|---|---|---|
| 13 | | preset value (determined according to whole vehicle control logic) * $T_{N3}$ (rated torque of P3 motor) | $n_{c3}$ (preset speed) | -$T_{u1}$ (normal electricity-generation torque of P1 motor) | $n_{u1}$ (normal electricity-generation speed of P1 motor) | t13 (refer to working condition in row 11) | sum of t1 to t13 |

(continued)

| | | preset value (determined according to whole vehicle control logic) * $T_{N3}$ (rated torque of P3 motor) to 10 (first preset torque) | $n_{c3}$ (preset speed) to $n_{r3}$ (rated speed of P3 motor) | $-T_{u1}$ (normal electricity-generation torque of P1 motor (determined according to whole vehicle control logic)) to -10 (second preset torque) | $n_{u1}$ (normal electricity-generation speed of P1 motor) to 500 (second preset speed) | t14 (determined according to shafting load capacity of electric drive transmission, which makes torque changes of P1 motor and P3 motor less than 40 N/s, and speed changes of P1 motor and P3 motor less than 500 r/min) | sum of t1 to t14 |
|---|---|---|---|---|---|---|---|
| 14 | | | | | | | |
| 15 | | 10 (first preset torque) to 0 | $n_{r3}$ (rated speed of P3 motor) | second preset torque to 0 | second preset speed to 0 | t15 (determined by load capacity in the case of positive and negative/negative and positive transition of shafting load torque of electric drive transmission) | sum of t1 to t15 |
| 16 | | 0 | $n_{r3}$ (rated speed of P3 motor) | 0 | 0 | t16 (determined by load capacity in the case of positive and negative/negative and positive transition of shafting load torque of electric drive transmission) | sum of t1 to t16 |
| 17 | | 0 to -10 | $n_{r3}$ (rated speed of P3 motor) | 0 | 0 | t17 (short-time stop to reduce shafting load) | sum of t1 to t17 |
| 18 | D1 | second preset torque to $-T_{N3}$ (feed rated torque of P3 motor) | $n_{r3}$ (rated speed of P3 motor) | 0 | 0 | t18 (determined according to shafting load capacity of electric drive transmission, which makes torque change of P3 motor less than 40 N/s, and speed change less than 500 r/min) | sum of t1 to t18 |
| 19 | | $-T_{N3}$ (feed rated torque of P3 motor) | $n_{r3}$ (rated speed of P3 motor) | 0 | 0 | t19 (referring to time of working condition 9, and adjusting slightly in combination with single cycle time) | sum of t1 to t19 |
| 20 | D2 | $-T_{N3}$ ( feed rated torque of P3 motor) to third preset torque | $n_{r3}$ (rated speed of P3 motor) to $n_{t3}$ (turning speed of P3 motor) | 0 | 0 | t20 (determined according to shafting load capacity of electric drive transmission, which makes torque change of P3 motor less than 40 N/s, and speed change less than 500 r/min) | sum of t1 to t20 |
| 21 | | $-T_{P3}$ (feed peak torque of P3 motor) | $n_{t3}$ (turning speed of P3 motor) | 0 | 0 | t21 (determined according to control strategy of vehicle for feed peak torque) | sum of t1 to t21 |

(continued)

| | | | | | | | |
|---|---|---|---|---|---|---|---|
| 22 | D3 | $-T_{P3}$ (feed peak torque of P3 motor) to $-T_{N3}$ (feed rated torque of P3 motor) | $n_{t3}$ (turning speed of P3 motor) to $n_{r3}$ (rated speed of P3 motor) | 0 | 0 | t22 (determined according to shafting load capacity of electric drive transmission, which makes torque change of P3 motor less than 40 N/s, and speed change less than 500 r/min) | sum of t1 to t22 |
| 23 | | $-T_{N3}$ (feed rated torque of P3 motor) | $n_{r3}$ (rated speed of P3 motor) | 0 | 0 | t23(referring to working condition 9) | sum of t1 to t23 |
| 24 | | $-T_{N3}$ (feed rated torque of P3 motor) to second preset torque | $n_{r3}$ (rated speed of P3 motor) to second preset speed | 0 | 0 | t24 (determined according to shafting load capacity of electric drive transmission, which makes torque change of P3 motor less than 40 N/s, and speed change less than 500 r/min) | sum of t1 to t24 |
| 25 | | second preset torque to 0 | second preset speed to 0 | 0 | 0 | t25 (determined by load capacity in the case of positive and negative/negative and positive transition of shafting load torque) | sum of t1 to t25 |
| 26 | | 0 | 0 | 0 to second preset torque | 0 to second preset speed | t26 (short-time stop to reduce shafting load) | sum of t1 to t26 |
| 27 | E | 0 | 0 | second preset torque to $-T_{N1}$ (power generation rated torque of P1 motor) | Second preset speed to $n_{r1}$ (rated speed of P1 motor) | t27 (determined according to shafting load capacity of electric drive transmission, which makes torque change of P1 motor less than 40 N/s, and speed change less than 500 r/min) | sum of t1 to t27 |
| 28 | | 0 | 0 | $-T_{N1}$ (power generation rated torque of P1 motor) | $n_{t1}$ (rated speed of P1 motor) | t28 (approximate single cycle time is confirmed according to shafting fatigue damage time and shafting alternate load capacity, and the working condition time is confirmed in combination with other working condition time) | sum of t1 to t28 |

(continued)

| | | | -$T_{N1}$ (power generation rated torque of P1 motor) to second preset torque | $n_{r1}$ (rated speed of P1 motor) to second preset speed | t29 (determined according to shafting load capacity of electric drive transmission, which makes torque change of P1 motor less than 40 N/s, and speed change less than 500 r/min) | sum of t1 to t29 |
|---|---|---|---|---|---|---|
| 29 | 0 | 0 | | | | |
| 30 | 0 | 0 | second preset torque to 0 | second preset speed to 0 | t30 (determined by load capacity in the case of positive and negative/negative and positive transition of shafting load torque of electric drive transmission) | sum of t1 to t30 |

To sum up, based on the product performance design parameters of the P13 configuration electric drive transmission, parameter boundaries of the P1 motor torque, the P3 motor torque, the P1 motor speed and the P3 motor speed in the first-type working conditions is determined; in combination with a whole cooling capacity of the P13 configuration electric drive transmission, a stator temperature and a load capacity of the other component systems, the parameter boundary of the respective duration and the cumulative time length is determined;

based on the whole vehicle control logic, parameter boundaries of the P1 motor torque, the P3 motor torque, the P1 motor speed and the P3 motor speed in the second-type working conditions is determined; and in combination with the overall cooling capacity of the P13 configuration electric drive transmission, the stator temperature and the load capacity of the other component systems, the parameter boundary of the respective duration and the cumulative time length is determined.

In conjunction with following tables, in this embodiment, in a P3 motor design target working condition A: the boundary of the P3 motor torque is determined according to a peak torque of the P3 motor, the boundary of the P3 motor speed is determined according to a turning-point speed of the P3 motor, the P1 motor torque and the P1 motor speed are both 0, and the recpective working durations are determined according to a time required for the stator temperature of the P3 motor to rise to an upper limit temperature when the P3 motor continuously outputs at the peak torque.

The first-type working conditions further includes a motor system coupling working condition B; and the motor system coupling working condition B includes three coupling working conditions;

in a first coupling working condition B 1: the boundary of the P3 motor torque is determined according to a rated torque of the P3 motor, the boundary of the P3 motor speed is determined according to a rated speed of the P3 motor, the boundary of the P1 motor torque is determined according to an electricity-generation peak torque of the P1 motor, and the boundary of the P1 motor speed is determined according to a turning-point speed of the P1 motor; the duration is determined according to a time required for the stator temperature of the P1 motor to rise to an upper limit temperature when the P1 motor outputs at the power generation peak torque;

in a second coupling working condition B2: the boundary of the P3 motor torque is determined according to a rated torque of the P3 motor, the boundary of the P3 motor speed is determined according to a rated speed of the P3 motor, the boundary of the P1 motor torque is determined according to an electricity-generation rated torque of the P1 motor, the boundary of the P1 motor speed is determined according to a rated speed of the P1 motor, and the recpective working durations are determined according to the whole cooling capability of the electric drive transmission;

in a third coupling working condition B3: the boundary of the P3 motor torque is determined according to a continuous-working torque of the P3 motor at a maximum working speed, the boundary of the P3 motor speed is determined according to a maximum working speed of the P3 motor, the boundary of the P1 motor torque is determined according to a continuous-working torque of the P1 motor at a maximum working speed, the boundary of the P1 motor speed is determined according to a maximum working speed of the P1 motor, and the respective working durations are preset.

The second-type working conditions includes a common working condition C of the whole vehicle, in the common working condition C of the whole vehicle: the boundary of the P3 motor torque is determined according to a product of the rated torque of the P3 motor multiplied by a preset value, the boundary of the P3 motor speed is determined according to a preset motor speed, the boundary of the P1 motor torque is determined according to a normal electricity- generation torque of the P1 motor, the boundary of the P1 motor speed is determined according to a normal electricity- generation speed of the P1 motor, and the respective working durations are preset.

The first-type working conditions further includes a P3 motor electricity-feeding design target working condition D, and the P3 motor electricity-feeding design target working condition D includes three electricity-feeding design target working conditions;

the P1 motor torque, the P1 motor speed and the duration of the P1 motor in the three electricity-feeding design target working conditions are 0;
in a first electricity-feeding design target working condition D1: the boundary value of the P3 motor torque is determined according to a feed rated torque of the P3 motor, the boundary value of the P3 motor speed is determined according to a rated speed of the P3 motor, and the recpective working durations are determined according to a time required for the stator temperature to rise to the upper limit temperature when the P3 motor outputs at the feed rated torque;
in a second electricity-feeding design target working condition D2: the boundary value of the P3 motor torque is determined according to a feed peak torque of the P3 motor, the boundary value of the P3 motor speed is determined according to a turning-point speed of the P3 motor, and the recpective working durations are determined according to a time required for the stator temperature to rise to the upper limit temperature when the P3 motor is at the feed peak torque;
in a third electricity-feeding design target working condition D3: the boundary value of the P3 motor torque is determined according to the feed rated torque of the P3 motor, the boundary value of the P3 motor speed is determined according to the rated speed of the P3 motor, and the recpective working durations are determined according to the whole cooling capacity of the electric drive transmission.

The first-type working conditions further includes a P1 motor design target working condition E; in the P1 motor design target working condition E: the P3 motor torque, the P3 motor speed and the duration of the P3 motor are 0, the boundary of the P1 motor torque is determined according to an electricity-generation rated torque of the P1 motor, the boundary of the P1 motor speed is determined according to a rated speed of the P1 motor, and the respective working durations are preset.

The source of a working condition of each portion is as follows:

| Working Condition Mode | | Torque | Speed | Determination of Working Condition Time |
|---|---|---|---|---|
| A | P3 motor design target working condition | peak torque of P3 motor | turning speed of P3 motor | P3 hardware design condition, stator temperature (temperature of motor stator rises rapidly at peak torque of motor, and stator rises to upper limit temperature to determine the working condition time) |
| | | P1 standby | P1 standby | P1 standby |

Working condition B: motor system coupling working condition

| Working Condition Mode | | Torque | Speed | Determination of Working Condition Time |
|---|---|---|---|---|
| B1 | motor system coupling working condition | rated torque of P3 motor | rated speed of P3 motor | cooperating P1 peak torque working condition (determined by P1 peak torque operation time) |
| | | power generation peak torque of P1 motor | turning speed of P1 motor | P1 hardware design condition, stator temperature |
| B2 | | power generation rated torque of P1 motor | rated speed of P1 motor | whole cooling level, waiting for recovery of stator temperature (till temperature output by continuous torque) |

| | | rated torque of P3 motor | rated speed of P3 motor | whole cooling level, waiting for recovery of stator temperature |
|---|---|---|---|---|
| | B3 | continuous torque at maximum working speed (product performance parameter) continuous torque at maximum working speed | maximum working speed maximum working speed | single working condition cycle time design (facilitating time design for bench to conduct each working condition) single working condition cycle time design |

Working condition C: common working condition of the whole vehicle

| Working Condition Mode | | Torque/Power | Speed | Determination of Working Condition Time |
|---|---|---|---|---|
| C | common working condition of whole vehicle | preset value (determined according to whole vehicle control logic) * rated torque of P3 motor | preset speed of P3 motor | whole load statistics, single working condition cycle time design |
| | | conventional power generation torque of P1 motor | conventional power generation speed of P1 motor | whole load statistics, single working condition cycle time design |

Working condition D: P3 motor feed design target working condition

| Working Condition Mode | | Torque | Speed | Determination of Working Condition Time |
|---|---|---|---|---|
| D1 | P3 motor feed design target working condition | feed rated torque of P3 motor | rated speed of P3 motor | P3 hardware design condition, stator temperature |
| | | P1 Standby | P1 Standby | P1 Standby |
| D2 | | feed peak torque of P3 motor | turning speed of P3 motor | P3 hardware design condition, stator temperature |
| | | P1 Standby | P1 Standby | P1 Standby |
| D3 | | feed rated torque of P3 motor | rated speed of P3 motor | whole cooling level, waiting for recovery of stator temperature |
| | | P1 Standby | P1 Standby | P1 Standby |

Working condition E: P1 motor design target working condition

| Working Condition Mode | | Torque/Power | Speed | Determination of Working Condition Time |
|---|---|---|---|---|
| E | P1 motor design target working condition | P3 motor standby | P3 motor standby | P3 motor standby |
| | | power generation rated torque of P1 motor | rated speed of P1 motor | single working condition cycle time design |

(4) Determination of reliability verification working condition cycle number:

The dual-motor system reliability verification is based on assembly and verification of the electric drive transmission. The test verification duration is based on a fatigue life of a product shafting, a bearing, a gear and other component systems determined by the Miner linear damage theory under the above designed working condition,
and then a shortest operation duration of the electric drive transmission is selected from multiple fatigue lives. However, standards of the whole vehicle design mileage and a service life (usually 300,000 kilometers in 10 years) need to be met.

① Linear damage accumulation theory: the Miner linear damage accumulation theory is adopted for the fatigue lives of the bearing, the gear and the like of the electric drive transmission. In actual operation, the bearing and the gear will produce a certain amount of fatigue damage in each cycle of each load torque, which will be accumulated linearly. In combination with a material fatigue S-N curve, when the damage is accumulated linearly to 1, fatigue failure occurs.

That is,

$$\sum_{i=1} \frac{n_i}{N_i} = 1 :$$

In the formula, $n_i$ represents a working cycle number of a sample under an effect of a load torque Ti, and $N_i$ represents a failure cycle number of a stress $T_i$ relative to the material on the S-N curve in FIG. 4.

② Damage calculation formula: material load damage calculation: $D_i = T_i^e * N_i$:

$D_i$ represents a damage by a cycle number of $N_i$ under the load torque $T_i$; and e represents a slope of the fatigue S-N curve of the bearing material.
Calculation of total material damage:

$$D = \sum_{i=1} T_i^e * N_i$$

③ Relation between a damage and an input torque, an input speed and an operation time:

Calculation of a damage equivalence principle under a different torque:

$$\frac{N_j}{N_i} = (\frac{T_i}{T_j})^e :$$

Relation between a speed, a torque, an operation time and a damage: $v_i = D_i/(T_i^e * 60)$; $t_i = D_i/T_i^e/60$

In the formula, $V_i$ is an input speed at the torque $T_i$ under the load damage $D_i$; $t_i$ is an operation time at a speed $V_i$ under the load damage $D_i$.

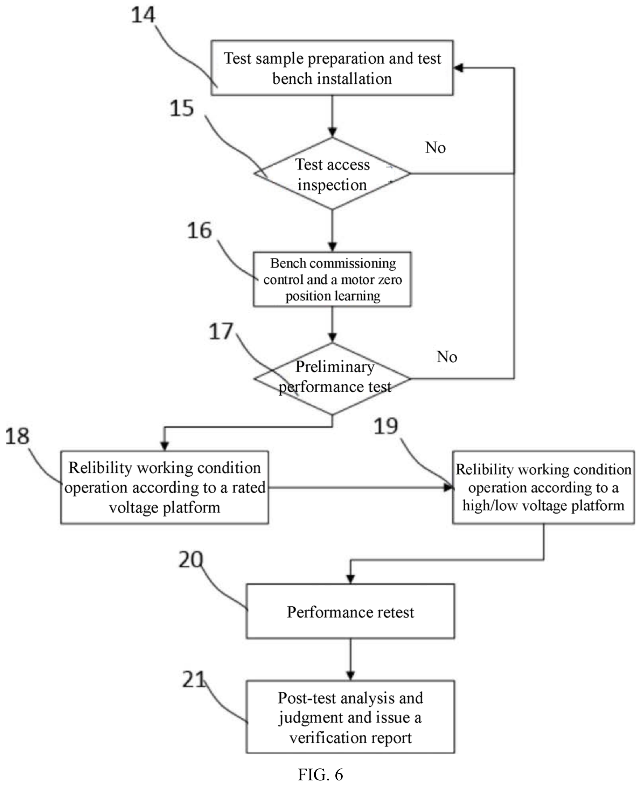

According to the Miner linear damage, the operation time of the shafting, the gear and other component systems under the above working conditions are calculated respectively, and the reliability operation time T (it is recommended to be higher than a time recommended by a national standard, $T \geq 400$) of the electric drive transmission is further determined, a test operation cycle: $N = \frac{T * 3600}{900}$ As shown in FIG. 6, the technical solution of the motor system reliability test method for the P13 configuration electric drive transmission of the present invention has following detailed steps:

Test preparation 14: the assembled P13 configuration electric drive transmission 12 is fixed on the test bench, an output end of the electric drive transmission is connected with the No.1 bench load motor 8 and the No.2 bench load motor 7 by means of the half axles 10 and 9 respectively, and the load motor is ensured to be centered with a half axle hole. The battery simulator 6 and the motor controller PEU5 are connected with the P1 motor and the P2 motor by means of high-voltage wires, communication between the test bench 11 and the motor controller PEU5 is commissioned, cooling devices such as water temperature and oil temperature are connected and commissioned by means of a pipeline of a product state, a proper amount of lubricating oil is added to the electric drive transmission 12, and the bench is commissioned to ensure that the electric drive transmission can operate normally on the bench.

Test access inspection 15: access inspection before the test is conducted according to electric drive transmission motor reliability access inspection rules, mainly including a product state confirmation, a test version data inspection, a test control boundary condition confirmation and an on-site safety inspection of the test bench, and the like.

Bench commissioning control 16: during the test, the temperature of the lubricating oil and the temperature of the cooling liquid need to be controlled within a product requirement range, and the speed of the oil pump is set according to the lubricating flow demand of the product. Setting of alarm limits of relevant parameters is completed. The No.3 bench drive motor 13 is set to adopt a Speed/Torque mode, the No.1 bench load motor and the No.2 bench load motor are set to adopt the Speed/Torque mode, and speeds of the No.1 bench load motor and the No.2 bench load motor are set by performing conversion calculation on a P3 motor speed according to a shafting speed ratio of the transmission.

A zero position learning 16: after commissioning of the bench, the test sample and software is confirmed to be completed, the zero position learning of the P1 and P3 motors is completed according to function requirements of the product.

Preliminary performance test 17: the test sample conducts preliminary operation before the preliminary performance test, an external characteristic test on the motor is conducted after the operation is normal. The external characteristic test speed shall be carried out every 500 rpm to the maximum working speed, and the speed point needs to include a rated speed and a turning-point speed. An external characteristic torque test shall be according to the design torques of the P1 and P3 motors at each speed, only the feed torque portion is tested for the P1 motor, and the drive and feed torque states are tested for the P3 motor. Boundary conditions of the lubricating oil, the cooling liquid, a lubricating flow, a voltage platform and the like are ensured to be within a product specification range in the performance test process. Manual measurement may be conducted in the test process, or a test program may be compiled, and the test program is associated with the boundary values of relevant parameters for measurement.

The specific implementation steps of the motor system reliability working condition are as follows:

Reliability working condition operation program compiling: the bench motor speed/torque control mode is set, a target operation speed, a target operation torque, a transition time and an operation time of each motor are set according to the Table 1 (i.e., the dual-motor system reliability verification working condition test table) obtained after adjustment, and the boundaries of relevant parameters in the working condition program are associated as the working condition operation judgment conditions.

During the test, a safety inspection of the operation bench shall be carried out every 20 hours to confirm that there is no leakage of oil, cooling liquid and other liquids, inspect that there is no ablation or exposure of high and low voltage lines and corresponding connection places, and inspect a bench arrangement position and looseness of a reinforcing bolt.

An INCA is adopted to configure a DBC file corresponding to a controller to collect all DBC parameters of the controller. It is necessary to manually confirm main parameters every hour when important parameters are out of alarm limits set by the bench. The important parameters shall be recorded at a frequency of not less than 50Hz. The operation data are recorded in the whole process.

The external characteristic test of the sample shall be conducted every 40 hours according to the preliminary performance test procedure. The performance test data of the process are compared, and a deterioration trend is concerned.

First 80% of the cycle working condition operates according to a designed rated voltage platform, 80%-90% of the cycle working condition operates according to a designed minimum working voltage platform, and a corresponding speed and a torque are subjected to verification 19 according to designed values under the minimum working voltage. 90%-100% of the working condition time adopts a designed maximum working voltage platform for operation, and a corresponding speed and a torque are subjected to verification 19 according to designed values under the minimum working voltage. After the cycle working condition operation is completed, an operation under the rated working voltage, the maximum working speed and the rated power for two hours is conducted.

Performance retest 20: after the reliability test working condition is completed, performance retest is conducted on the P13 configuration electric drive transmission, and a content of the test shall be conducted in accordance with that of the preliminary performance test.

Post-test analysis 21: the electric drive transmission leaves the bench, and is analyzed and judged, and a test report is issued.

The above embodiments are preferred embodiments of the present invention, but the embodiments of the present invention are not limited by the above embodiments, and any other changes, modifications, substitutions, combinations, and simplifications made without departing from the spirit of the essence and principles of the present invention should be considered as equivalent substitutions, and are all included in the scope of protection of the present invention.

## Claims

1. A working condition design method for dual-motor system reliability verification of a P13 configuration electric drive transmission, **characterized in that** the P13 configuration electric drive transmission comprises a dual-motor system and other component systems, and the other component systems comprise gears, shaftings and bearings, the method comprises:

   designing, based on a structural principle and a use mode of the P13 configuration electric drive transmission and in combination with a motor verification coverage scenario and a whole vehicle road scenario, dual-motor system reliability verification working conditions which use P3 motor working conditions as main conditions and use P1 motor working conditions as complemental conditions;

forming, in combination with product performance design parameters and a whole vehicle control logic, an initial working condition test table of working conditions for the dual-motor system reliability verification; and adjusting an operation time of each working condition in the initial working condition test table to obtain a final required working condition test table for the dual-motor system reliability verification and a working condition cycle number for the dual-motor system reliability verification.

2. The working condition design method for the dual-motor system reliability verification of the P13 configuration electric drive transmission according to claim 1, **characterized in that** the step of adjusting the operation time of each working condition in the initial working condition test table to obtain the final required working condition test table for the dual-motor system reliability verification and the working condition cycle number for the dual-motor system reliability verification comprises:

testing the P13 configuration electric drive transmission based on a designed use mileage and the initial working condition test table of the whole P13 configuration electric drive transmission, and adjusting the operation time of each working condition in the initial working condition test table by using the Miner linear damage accumulation theory, a whole vehicle designed mileage, an alternating load cycle number of the whole P13 configuration electric drive transmission on torque and a load capacity of the whole P13 configuration electric drive transmission on change rates of speed and torque until assessments of the other component systems of the P13 configuration electric drive transmission all meet a reliability strength requirement of the designed use mileage of whole vehicle and the other component systems all meet a load level for normal use, so as to obtain the final required working condition test table for the dual-motor system reliability verification and the working condition cycle number for the dual-motor system reliability verification.

3. The working condition design method for the dual-motor system reliability verification of the P13 configuration electric drive transmission according to claim 1, **characterized in that** first-type working conditions related to product performance design parameters and second-type working conditions related to normal use of the whole vehicle are included in the initial working condition test table, wherein parameters of the first-type working conditions and the second-type working conditions comprise a P1 motor torque, a P3 motor torque, a P1 motor speed, a P3 motor speed, respective working durations and a cumulative time length; wherein the cumulative time length refers to a total test time length in a single reliability verification cycle;

the step of forming, in combination with the product performance design parameters and the whole vehicle control logic, the initial working condition test table of working conditions for the dual-motor system reliability verification comprises:

determining, based on the product performance design parameters of the P13 configuration electric drive transmission, parameter boundaries of the P1 motor torque, the P3 motor torque, the P1 motor speed and the P3 motor speed in the first-type working conditions; determining, in combination with an overall cooling capacity of the P13 configuration electric drive transmission, a stator temperature and load capacities of the other component systems, parameter boundaries of the respective working durations and the cumulative time length;

determining, based on the whole vehicle control logic, parameter boundaries of the P1 motor torque, the P3 motor torque, the P1 motor speed and the P3 motor speed in the second-type working conditions; and determining, in combination with the overall cooling capacity of the P13 configuration electric drive transmission, the stator temperature and the load capacity of the other component systems, parameter boundaries of the respective working durations and the cumulative time length.

4. The working condition design method for the dual-motor system reliability verification of the P13 configuration electric drive transmission according to claim 3, **characterized in that** the first-type working conditions comprise a P3 motor design target working condition A; and

in the P3 motor design target working condition A: the boundary of the P3 motor torque is determined according to a peak torque of the P3 motor, the boundary of the P3 motor speed is determined according to a turning-point speed of the P3 motor, the P1 motor torque and the P1 motor speed are both 0, and the respective working durations are determined according to a time required for the stator temperature of the P3 motor to rise to an upper limit temperature when the P3 motor continuously outputs at the peak torque.

5. The working condition design method for the dual-motor system reliability verification of the P13 configuration electric drive transmission according to claim 3, **characterized in that** the first-type working conditions further comprise a motor system coupling working condition B; and the motor system coupling working condition B comprises three coupling working conditions;

in a first coupling working condition B1: the boundary of the P3 motor torque is determined according to a rated torque of the P3 motor, the boundary of the P3 motor speed is determined according to a rated speed of the P3 motor, the boundary of the P1 motor torque is determined according to an electricity-generation peak torque of the P1 motor, and the boundary of the P1 motor speed is determined according to a turning-point speed of the P1 motor; the respective working durations are determined according to a time required for the stator temperature of the P1 motor to rise to an upper limit temperature when the P1 motor outputs at the electricity-generation peak torque;

in a second coupling working condition B2: the boundary of the P3 motor torque is determined according to the rated torque of the P3 motor, the boundary of the P3 motor speed is determined according to the rated speed of the P3 motor, the boundary of the P1 motor torque is determined according to an electricity-generation rated torque of the P1 motor, the boundary of the P1 motor speed is determined according to a rated speed of the P1 motor, and the respective working durations are determined according to the overall cooling capability of the electric drive transmission; and

in a third coupling working condition B3: the boundary of the P3 motor torque is determined according to a continuous-working torque of the P3 motor at a maximum working speed thereof, the boundary of the P3 motor speed is determined according to the maximum working speed of the P3 motor, the boundary of the P1 motor torque is determined according to a continuous-working torque of the P1 motor at a maximum working speed thereof, the boundary of the P1 motor speed is determined according to the maximum working speed of the P1 motor, and the respective working durations are preset.

6. The working condition design method for the dual-motor system reliability verification of the P13 configuration electric drive transmission according to claim 3, **characterized in that** the second-type working conditions comprise a common working condition C of the whole vehicle,

in the common working condition C of the whole vehicle: the boundary of the P3 motor torque is determined according to a product of the rated torque of the P3 motor multiplied by a preset value, the boundary of the P3 motor speed is determined according to a preset motor speed, the boundary of the P1 motor torque is determined according to a normal electricity-generation torque of the P1 motor, the boundary of the P1 motor speed is determined according to a normal electricity-generation speed of the P1 motor, and the respective working durations are preset.

7. The working condition design method for the dual-motor system reliability verification of the P13 configuration electric drive transmission according to claim 3, **characterized in that** the first-type working conditions further comprise a P3 motor electricity-feeding design target working condition D, and the P3 motor electricity-feeding design target working condition D comprises three electricity-feeding design target working conditions;

the P1 motor torque, the P1 motor speed and the respective working durations of the P1 motor in the three electricity-feeding design target working conditions are all 0;

in a first electricity-feeding design target working condition D1: the boundary value of the P3 motor torque is determined according to an electricity-feeding rated torque of the P3 motor, the boundary value of the P3 motor speed is determined according to a rated speed of the P3 motor, and the respective working durations are determined according to a time required for the stator temperature of the P3 motor to rise to an upper limit temperature when the P3 motor outputs at the electricity-feeding rated torque;

in a second electricity-feeding design target working condition D2: the boundary value of the P3 motor torque is determined according to an electricity-feeding peak torque of the P3 motor, the boundary value of the P3 motor speed is determined according to a turning-point speed of the P3 motor, and the respective working durations are determined according to a time required for the stator temperature of the P3 motor to rise to the upper limit temperature when the P3 motor is at the electricity-feeding peak torque; and

in a third electricity-feeding design target working condition D3: the boundary value of the P3 motor torque is determined according to the electricity-feeding rated torque of the P3 motor, the boundary value of the P3 motor speed is determined according to the rated speed of the P3 motor, and the respective working durations are determined according to the overall cooling capacity of the electric drive transmission.

8. The working condition design method for the dual-motor system reliability verification of the P13 configuration electric drive transmission according to claim 3, **characterized in that** the first-type working conditions further comprise a P1 motor design target working condition E;

in the P1 motor design target working condition E: the P3 motor torque, the P3 motor speed and the respective working durations of the P3 motor are all 0, the boundary of the P1 motor torque is determined according to an electricity-generation rated torque of the P1 motor, the boundary of the P1 motor speed is determined according to a rated speed of the P1 motor, and the respective working durations are preset.

9. A dual-motor system reliability test method for a P13 configuration electric drive transmission, **characterized in that**, the method comprises:

> test preparation: installing, according to a state of a whole vehicle, the P13 configuration electric drive transmission onto a test bench;
> test access inspection: comprising product state confirmation, test version data inspection, test control boundary condition confirmation and on-site safety inspection of the test bench;
> bench commissioning control and motor zero position learning;
> preliminary performance test: conducting, before the dual-motor system reliability test, external characteristic speed test and external characteristic torque test on both a P1 motor and a P3 motor of the P13 configuration electric drive transmission;
> operation at respective working conditions: the respective working conditions are obtained by using the working condition design method for the dual-motor system reliability verification of the P13 configuration electric drive transmission of any one of claims 1 to 8, and the dual-motor system of the P13 configuration electric drive transmission is subjected to operation cycles at the respective working conditions according to the obtained working condition cycle number and the obtained final required working condition test table for the dual-motor system reliability verification, wherein, in the operation cycles at the respective working conditions, first 80% of the operation cycles are performed according to a designed rated voltage platform, 80% to 90% of the operation cycles are performed according to a designed minimum working voltage platform, and 90% to 100% of the operation cycles are performed according to a designed maximum working voltage platform;
> performance retest: conducting, after the dual-motor system reliability test, external characteristic speed test and external characteristic torque test on both the P1 motor and the P3 motor of the P13 configuration electric drive transmission; and
> post-test analysis.

10. The dual-motor system reliability test method for the P13 configuration electric drive transmission according to claim 9, **characterized in that** in the step of test preparation, the P13 configuration electric drive transmission is installed onto the test bench according to the following process:
a No.3 bench drive motor is used to simulate a vehicle-mounted engine to supply energy input for the P13 configuration electric drive transmission, a No.1 bench load motor and a No.2 bench load motor are used to simulate whole vehicle wheel end loads of the P13 configuration electric drive transmission, a motor controller PEU is used to control functional operation of both the P1 motor and the P3 motor of the P13 configuration electric drive transmission, the No.1 bench load motor, the No.2 bench load motor, the motor controller PEU and a battery simulator are connected with the test bench respectively, and the battery simulator is connected with the motor controller PEU.

11. The dual-motor system reliability test method for the P13 configuration electric drive transmission according to claim 9, **characterized in that**, in the process of dual-motor system reliability test, a clutch of the P13 configuration electric drive transmission is not engaged in the whole process.

12. The dual-motor system reliability test method for the P13 configuration electric drive transmission according to claim 9, **characterized in that**, in the steps of preliminary performance test and performance retest,

> only an electricity-feeding torque of the P1 motor is tested when the external characteristic torque test is conducted on the P1 motor, and only a drive torque and an electricity-feeding torque of the P3 motor are tested when the external characteristic torque test is conducted on the P3 motor;
> the external characteristic speed test is conducted on both the P1 motor and the P3 motor according to a preset speed range until reaching a maximum working speed of the corresponding motor, and speed test points in the external characteristic speed test for both the P1 motor and the P3 motor comprise a rated speed and a turning-point speed of the corresponding motor; and
> it is required to ensure that boundary conditions of lubricating oil, cooling liquid, lubricating flow rate and voltage platform of the test bench are within a product specification range of the P13 configuration electric drive transmission in the steps of preliminary performance test and performance retest.

13. The dual-motor system reliability test method for the P13 configuration electric drive transmission according to claim 9, **characterized in that** in the step of bench commissioning control, it is required that firstly a cooling liquid temperature and a lubricating oil temperature of the test bench are set according to lubrication and cooling requirements of the P13 configuration electric drive transmission, and an oil pump speed of the test bench is set according to lubricating flow rate requirement of the P13 configuration electric drive transmission; and after setting alarm limits of the cooling liquid temperature, the lubricating oil temperature and the oil pump speed, a No.1 bench load motor, a No.2 bench load motor and a No.3 bench drive motor are set to adopt a speed/torque mode, and a speed of the No.1 bench load motor and a speed of the No.2 bench load motor are set by performing conversion calculation on a P3 motor speed according to a shafting speed ratio of the P13 configuration electric drive transmission.

14. The dual-motor system reliability test method for the P13 configuration electric drive transmission according to claim 9, **characterized in that** in the step of operation at the respective working conditions, after 100% of the operation cycles are completed, the P1 motor and the P3 motor of the P13 configuration electric drive transmission are controlled to respectively run for preset durations at respective rated working voltage thereof, at respective maximum working speed thereof and at respective rated power thereof.

FIG. 1

FIG. 2

FIG. 3

FIG. 4

Design, based on a structural principle and a use mode of the P13 configuration electric drive transmission and in combination with a motor verification coverage scenario and a whole vehicle road scenario, a dual-motor system reliability verification working condition with a P3 motor working condition as a main line and a P1 motor working condition as a cooperation one; form, in combination with product performance design parameters and a whole vehicle control logic, an initial working condition test table of the dual-motor system reliability verification working condition — S101

Adjust an operation time of each working condition in the initial working condition test table to obtain a final required dual-motor system reliability verification working condition test table and a working condition cycle number for the dual-motor system reliability verification — S102

FIG. 5

14

Test sample preparation and test bench installation

15

Test access inspection → No

16

Bench commissioning control and a motor zero position learning

17

Preliminary performance test → No

18

Relibility working condition operation according to a rated voltage platform

19

Relibility working condition operation according to a high/low voltage platform

20

Performance retest

21

Post-test analysis and judgment and issue a verification report

FIG. 6

## INTERNATIONAL SEARCH REPORT

| | International application No. |
|---|---|
| | **PCT/CN2024/076131** |

### A. CLASSIFICATION OF SUBJECT MATTER

G06F30/20(2020.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, ENTXTC, WPABSC, DWPI: P13, 电机, 工况, 设计, 可靠性, 调整, 修订, 修改, 运行时间, motor, electric machinery, working condition, design, reliability, adjust, run time, miner

### C. DOCUMENTS CONSIDERED TO BE RELEVANT

| Category* | Citation of document, with indication, where appropriate, of the relevant passages | Relevant to claim No. |
|---|---|---|
| PX | CN 117390865 A (CHONGQING CHANGAN AUTOMOBILE CO., LTD.) 12 January 2024 (2024-01-12)<br>claims 1-14 | 1-14 |
| X | CN 116822207 A (CHONGQING CHANGAN AUTOMOBILE CO., LTD.) 29 September 2023 (2023-09-29)<br>description, paragraphs 4, 52, 73, and 111, and figure 2 | 1 |
| A | CN 116822207 A (CHONGQING CHANGAN AUTOMOBILE CO., LTD.) 29 September 2023 (2023-09-29)<br>entire document | 2-14 |
| A | CN 115952682 A (CHONGQING CHANGAN AUTOMOBILE CO., LTD.) 11 April 2023 (2023-04-11)<br>entire document | 1-14 |
| A | CN 116756986 A (ZHUZHOU CRRC TIMES ELECTRIC CO., LTD.) 15 September 2023 (2023-09-15)<br>entire document | 1-14 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 June 2024** | **26 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
| --- | --- |
| | **PCT/CN2024/076131** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022364953 A1 (UNIVERSITY OF SHANGHAI FOR SCIENCE AND TECHNOLOGY) 17 November 2022 (2022-11-17) entire document | 1-14 |

Form PCT/ISA/210 (second sheet) (July 2022)

### INTERNATIONAL SEARCH REPORT
#### Information on patent family members

International application No.

**PCT/CN2024/076131**

| Patent document cited in search report | | | Publication date (day/month/year) | Patent family member(s) | | | Publication date (day/month/year) |
|---|---|---|---|---|---|---|---|
| CN | 117390865 | A | 12 January 2024 | None | | | |
| CN | 116822207 | A | 29 September 2023 | None | | | |
| CN | 115952682 | A | 11 April 2023 | None | | | |
| CN | 116756986 | A | 15 September 2023 | None | | | |
| US | 2022364953 | A1 | 17 November 2022 | WO | 2022028419 | A1 | 10 February 2022 |
| | | | | CN | 111914370 | A | 10 November 2020 |
| | | | | CN | 111914370 | B | 02 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115575116 A

- CN 108983095 A